# EUROPEAN PATENT APPLICATION

(11) **EP 3 722 572 A1**
(43) Date of publication of application: **14.10.2020**
(21) Application number: 19168831.6
(22) Date of filing: 12.04.2019
(51) Int. Cl.: F02B 25/04, F02B 25/02, F02D 9/04, F02D 9/06, F02D 19/06, F02D 19/10, F02M 26/06, F02M 26/10, F02M 26/17, F02D 35/02, F02D 41/00

(54) **INTERNAL COMBUSTION ENGINE**

(71) Applicant: Winterthur Gas & Diesel Ltd., 8401 Winterthur (CH)
(72) Inventor: Hansen, Lars, 8267 Berlingen (CH)
(74) Representative: Hepp Wenger Ryffel AG

(57) **Abstract**

The present invention relates to an internal combustion engine (20) comprising a system 1 for exhaust gas recirculation, an internal combustion engine comprising a pilot injection system 10 and methods for running an internal combustion engine.

The internal combustion engine (20) has at least one cylinder (21), preferably a large vessel engine with at least one cylinder (21) having an inner diameter (27) of at least 200mm, preferably a low pressure fuel gas engine with a cylinder having at least one gas admission valve for injecting low pressure fuel gas directly into the cylinder through the cylinder wall (22). The internal combustion engine (20) comprising a system (1) for exhaust gas recirculation arranged between an exhaust outlet (2) and an air inlet (3). The system (1) for exhaust gas recirculation comprising an exhaust gas back pressure valve (9), wherein the exhaust gas back pressure valve (9) comprises a controllable opening, to provide an adaptable back pressure for controlling the EGR-rate, preferably in a range between 5 to 100mbar.

## Description

The present invention relates to an internal combustion engine comprising a system for exhaust gas recirculation, an internal combustion engine comprising a pilot injection system and methods for running an internal combustion engine.

The present invention preferably relates to an internal combustion engine like a large marine or ship engine or a stationary engine whose cylinders have an inner diameter of at least 200 mm. The engine preferably is a two-stroke engine or a two-stroke cross head engine. The engine can be a diesel or a gas engine, a dual fuel or a multi fuel engine. Burning of liquid and or gaseous fuels in such engines is possible as well as self-igniting or forced igniting.

The engine has at least one cylinder having a piston therein. The piston is connected to a crankshaft. The piston reciprocates between a top dead center (TDC) and a bottom dead center (BDC) during operation of the engine. The cylinder typically has at least one air passage opening for intake, the air inlet in particular arranged in the liner of the cylinder, and at least one air passage opening for exhaust, the exhaust outlet in particular arranged in the cover of the cylinder.

The internal combustion engine can be a longitudinally flushed two-stroke engine.

The term internal combustion engine also refers to large engines which can be operated not only in diesel mode, which is characterised by the self-ignition of the fuel, but also in Otto mode, which is characterised by the positive ignition of the fuel, or in mixtures of the two. Furthermore, the term internal combustion engine includes in particular dual-fuel engines and large engines in which the self-ignition of the fuel is used for the positive ignition of another fuel.

Engine speed is preferably below 800 RPM (4-stroke) and more preferably below 200 RPM (2-stroke) which indicates the designation of low speed engines.

Fuel can be diesel or marine diesel oils or heavy fuel oils or emulsions or slurries or methanol or ethanol as well as gases like liquid natural gas (LNG) liquid petrol gas (LPG) and so on.

Further possible fuels which might be added on request are: LBG (Liquified Biogas), biological Fuels (e. g. Algae fuel or Seaweed Oil), hydrogen, synthetic fuels from CO2 (e. g. made by Power-To-Gas or Power-To-Liquid).

Large ships, in particular vessels for transport of goods, usually are powered by internal combustion engines, in particular diesel and/or gas engines, mostly two-stroke, cross head engines. In case of liquid fuel, like heavy fuel oil, marine diesel oil, diesel or other liquids, as well as in case of gaseous fuels, like LNG, LPG or others, being burned by the engine, the exhaust from this combustion process needs to be cleaned to comply with the existing rules such as IMO Tier III.

The IMO emission standards commonly referred to as Tier I to Tier III standards inter alia define the NOₓ emission standards for existing and new marine engines.

For large ships the emissions requirements have been increasing, in particular with regard to the nitrogen oxide emissions. Thus, there is a need to reduce the amount of nitrogen oxides in the exhaust gas emitted by the internal combustion engines of these ships.

Engines, which supply low pressure gas into the cylinder before commencement of compression, are subject to spontaneous ignition during the compression stroke of the gas / air mixture. If it ignites spontaneously, the pressure in the cylinder significantly exceeds the maximum combustion pressure during normal operation, and if spontaneous ignition occurs frequently, there is a possibility that the cylinder element is overloaded. Natural ignition usually leads to insufficient use of fuel heat.

According to DK176118 water is supplied to the injection nozzle at a pressure of at least 50bar. A more homogeneous mixing in the cylinder results and local spontaneous ignition in the high concentration mixture area is prevented.

EP3081790 discloses a dual-fuel combustion engine, wherein the occurrence of pre-ignition can be controlled by introducing inert gas or exhaust gas. The engine may comprise an exhaust gas recirculation system. Usually the exhaust gas recirculation system needs an additional pressure elevating device, such as a blower, for guiding exhaust gas through the EGR path.

The EGR path of the exhaust gas recirculation system leads from the exhaust outlet of the cylinder to the air inlet of the cylinder.

The air inlet of the cylinder may be a scavenge air receiver. Before entering the scavenge air receiver, the gas may be guided through a scavenge air cooler.

The exhaust outlet of the cylinder may lead to an exhaust gas receiver, where for example the exhaust gas of more than one cylinder is collected.

It is an object of the present invention to avoid the drawbacks of the prior art and in particular to provide an internal combustion engine and a method of operating an internal combustion engine with better performance than in prior art engines.

The object is achieved by the internal combustion engines and the method of operating an internal combustion engine according to the independent claims.

According to a first aspect of the invention, the object is achieved by an internal combustion engine having at least one cylinder comprising a system for exhaust gas recirculation arranged between an exhaust outlet and an air inlet.

The system for exhaust gas recirculation comprises an exhaust gas flow restriction device being arranged between the EGR path and an exhaust gas funnel, providing a, preferably adaptable, back pressure for controlling the exhaust gas recirculation rate.

The exhaust gas flow restriction device may be a blind for reducing the open diameter of the flow path towards the funnel.

Preferably, the exhaust gas flow restriction device is an exhaust gas back pressure valve with a controllable opening, to provide an adaptable back pressure for controlling the EGR-rate, preferably in a range between 5 to 100mbar.

The exhaust gas recirculation rate, or EGR rate, is the percentage of exhaust gas in a mixture of exhaust gas and fresh air which is applied to the air inlet of the cylinder.

The engine preferably is a large vessel engine with at least one cylinder having an inner diameter of at least 200mm, preferably a low pressure fuel gas engine with a cylinder having at least one gas admission valve for injecting low pressure fuel gas directly into the cylinder through the cylinder wall. Preferably, also liquid fuel, such as diesel, may be introduced into the cylinder.

Especially the pre-mixed lean burn combustion solution for a two-stroke dual-fuel engine is very much dependent on the ratio of the air volume and the fuel volume (called "lambda") and the temperature. High temperatures on the piston underside provide a high risk of pre-ignition and can lead to excessive firing pressures. Also high compression pressure temperatures may lead to a similar behaviour, but can be counteracted by decreasing the compression ratio. On the other hand decreasing the compression ration leads to a low thermal efficiency when running on liquid fuel, and thus to an increased fuel consumption.

By introduction of recirculated exhaust gas an increased resistance of self-ignition of the air/fuel charge is provided.

According to prior art a frequency controlled blower is necessary to provide a constant or at least stable EGR-rate. The blower may be arranged between the exhaust outlet and a turbocharger.

The blower on the one hand has to be arranged in the EGR path and on the other hand has to be installed in a place where vibrations are low to guarantee the stability of the blower.

According to the present invention the EGR-rate may be adjusted by an exhaust gas back pressure valve with a controllable opening.

By choosing the degree of the opening of the exhaust gas back pressure valve the pressure in the EGR path, in a particular upstream of a turbocharger, and the exhaust gas recirculation rate may be adjusted. The more exhaust is prevented from leaving the system towards the exhaust funnel and the more exhaust gas is allowed to pass the EGR path, the higher is the exhaust gas pressure in the EGR path.

Preferably the back-pressure valve has a limitation to prevent a fully closing.

A blower provides a constant amount of exhaust gas, thus with a fixed blower setting the exhaust gas recirculation rate is dependent on the load. Setting the pressure with an exhaust gas flow restriction device, for example an exhaust gas back pressure valve, provides an EGR rate which is constant with respect to the load.

The exhaust gas back pressure valve may be manually-actuated, power-actuated, electrically actuated or spring-actuated. Preferably the valve is pneumatically or hydraulically actuated.

The valve may be a butterfly valve.

Typically, the EGR path comprises a junction from which the exhaust gas may be guided either towards the air inlet of the cylinder, preferably to a turbocharger, or towards an exhaust gas funnel.

Devices for exhaust gas treatment may be arranged between the exhaust gas flow restriction device, for example an exhaust gas back pressure valve, and the funnel.

The more open the exhaust gas back pressure valve is, the higher the probability that gas will flow in the direction of the exhaust gas funnel. The more the exhaust gas back pressure valve is closed, the higher is the flow into the EGR path.

In a preferable embodiment the internal combustion engine comprises a turbocharger.

Preferably, the turbocharger is arranged in the EGR path, such that the turbocharger at least partly is powerable by the exhaust gas.

The turbocharger may be arranged in the EGR path, such that the exhaust gas is guideable to the air inlet of the cylinder by the turbocharger mixed with fresh air. Hence the compressor of the turbocharger in particular may suck in exhaust gas and fresh air.

The turbocharger's compressor draws in ambient air and exhaust gas and compresses it before it enters into the air inlet of the cylinder, for example an intake manifold, at increased pressure. This results in a greater mass of air entering the cylinder on each intake stroke.

The power needed to spin the centrifugal compressor is derived from the kinetic energy of the engine's exhaust gases.

If there is more than one turbocharger, the air inlet receives a mixture of gas provided by the plurality of turbochargers.

In this case, each turbocharger may be arranged in a separate system for exhaust gas recirculation with an individual exhaust gas flow restriction device, for example an exhaust gas back pressure valve.

Alternatively all turbochargers guide exhaust gas into a common EGR path. A single exhaust gas flow restriction device, for example an exhaust gas back pressure valve, is arranged between the EGR path and the funnel.

Only one turbocharger may be arranged in a system for exhaust gas recirculation. At least one further turbocharger only provides fresh air and the respective compressor does not suck in exhaust gas.

The back pressure provided by the exhaust gas flow restriction device, for example an exhaust gas back pressure valve, and the suction pressure of the turbocharger may provide a stable exhaust gas flow with controlled EGR rate.

Thus, advantageously the system for exhaust gas recirculation does not comprise a pressure elevating device, such as a blower, apart from a turbocharger for providing fresh air.

The system for exhaust gas recirculation may comprise a cooling device arranged in the EGR path, preferably upstream of the compressor of a turbocharger. The exhaust may have a suitable temperature before it is mixed with ambient air and sucked in by the compressor of the turbocharger.

Preferably, the cooling device is designed to provide a pressure drop of smaller than 15mbar, such that the pressure in the EGR path upstream the compressor of a turbocharger is high enough to provide a sufficient percentage of exhaust gas in the mixture sucked in by the compressor.

The cooling device may for example be a cascade exhaust cooler, comprising a water circulation plant with a circulation water cooler. A cascade exhaust gas cooler provides for a neglectable contamination of cooling water.

Preferably, the system comprises at least one shut-off valve, arranged in the EGR path, for running the internal combustion engine without recirculation of exhaust gas. The shut-off valve is designed for and capable of positive closure to prevent flow within the EGR path. Typical shut-off valves include, but are not limited to, manually-actuated, power-actuated, or spring-actuated fail-safe shutoff valves. Preferably the shut-off valve only has two states, namely closed or open.

The internal combustion engine preferably is a dual fuel engine. In a diesel mode, the shut-off valve is closed, such that no exhaust gas recirculation is possible. In the gas mode the shut-off valve is open, such that the exhaust gas recirculation rate may be adjusted with the exhaust gas flow restriction device, for example an exhaust has back pressure valve.

In beneficial embodiment of the invention the internal combustion engine comprises a, preferably adaptable, air-flow restriction device (115), in particular an air-inlet valve with a controllable opening. Preferably, the air-inlet valve is arranged in the inlet for ambient air upstream of the compressor of a turbocharger. The air-inlet valve may be a throttle valve.

Additionally for increasing the EGR rate by providing an exhaust gas flow restriction device with a limited flow diameter or by closing the exhaust gas back pressure valve, the EGR rate may be further increased by reducing the amount of ambient air by providing the air flow restriction device, in particular closing the air-inlet valve.

To further overcome a pressure drop over the EGR path additionally the air-inlet valve arranged upstream the compressor may throttle the intake of the fresh air path. This helps to increase the suction of the EGR path.

The air-inlet valve may also be used for fine tuning the EGR rate.
In a beneficial embodiment of the invention the cylinder comprises a pilot ignition system. The pilot ignition system preferably is operated to ignite the non-auto-ignition fuel.

Favourably, the internal combustion engine comprises a measuring unit for detecting the firing pressure peak within the cylinder and the corresponding crank angle, that is the combustion phasing.

The measuring unit may comprise a pressure sensor for measuring the pressure curve in the cylinder over the crank angle.

For an engine comprising more than one cylinder, the pressure may be measured in all cylinders. A maximum of the average pressure curve of all cylinders may be detected and the corresponding mean crank angle.

The measuring unit provides a measure for the EGR rate, since the position of the maximum of the pressure curve with respect to the crank angle depends on the EGR rate.

Advantageously, the internal combustion engine comprises a control unit and the control unit is configured for adapting the EGR rate, by adapting the exhaust gas flow restriction device and/or by adapting an air-flow restriction device, depending on the crank angle for the firing pressure peak.

The optimal pressure peak crank angle is related to the optimal EGR-rate.

Due to changing ambient conditions, for example ambient temperatures and due to specific running conditions a change of combustion phasing may happen. Generally this may lead to a decrease of engine efficiency. Too high firing pressures, low combustion stability or methane slip may occur.

The optimum of the firing pressure peak may be between 5 and 8°CA (5 to 8 degree after the top dead centre of the crank, corresponding to 0°CA). In this region the efficiency, the emissions and the reliability of the engine is at its optimum.

The optimal crank angle of the firing pressure peak depends on the load of the engine. The control unit may be adapted to use or may comprise a table wherein the relation between load and optimal crank angle is stored, typically called vector for the setpoint.

The EGR rate may be adjusted
- by setting the opening of an exhaust gas back pressure valve,
- by providing a static exhaust gas flow restriction device and setting the opening of an air-inlet valve,
- by proving a static air flow restriction device and by setting the opening of an exhaust gas back pressure valve,
- or by setting the opening of an exhaust gas back pressure valve and by setting the opening of an air-inlet valve.

According to a second aspect of the invention, the object is achieved by an internal combustion engine, preferably as described above, having at least one cylinder comprising a pilot ignition system.

The internal combustion engine comprises a control unit, being configured for regulating the timing of the pilot ignition, preferably depending on the crank angle for the firing pressure peak.

Preferably the internal combustion engine is a large vessel engine with at least one cylinder having an inner diameter of at least 200mm.

Preferably the internal combustion engine is a low pressure fuel gas engine with a cylinder having at least one gas admission valve for injecting low pressure fuel gas directly into the cylinder through the cylinder wall.

The internal combustion engine preferably comprises a system for exhaust gas recirculation arranged between an exhaust outlet and an air inlet.

The timing of the pilot ignition influences the timing of the firing peak pressure. Hence, to get the firing peak pressure in an optimal place, the timing of pilot ignition, that is the timing of the pilot fuel injection, may be adjusted.

The maximum range for the pilot fuel injection timing typically is between -17°CA and -5°CA.

Alternatively, the timing of the firing peak pressure, that is the firing pressure peak crank angle, may be influenced by the EGR rate.

The internal combustion engine may comprise a measuring unit for detecting the firing peak pressure within the cylinder and the corresponding crank angle. The measuring unit may comprise a pressure sensor for measuring the pressure curve in the cylinder. The measurement shows whether the maximum of the pressure curve occurs at the desired time, that is at the optimal crank angle.

The internal combustion engine may comprise also a control unit which is configured for regulating the timing of the pilot injection depending on the crank angle for the firing pressure peak.

If the firing peak pressure is not within a predetermined crank angle range, given by the set point vector, the timing of the pilot ignition may be shifted. Preferably, the control unit automatically shifts the pilot ignition time depending on a measured crank angle of the firing peak pressure and on a predetermined optimal firing peak pressure crank angle.

In a beneficial embodiment, the internal combustion engine comprises a system for exhaust gas recirculation arranged between an exhaust outlet of the cylinder and an air inlet of the cylinder. The system for exhaust gas recirculation, preferably as described above, may comprise an exhaust gas flow restriction device, for example an exhaust gas back pressure valve, preferably comprising a controllable opening, and/or an air inlet restriction device. The control unit configured for adapting the EGR rate, for example by the opening or closing the exhaust gas back pressure valve and/or by opening or closing an air inlet valve.

By adapting the exhaust gas back pressure and hence the exhaust gas recirculation rate the timing of the pilot ignition depending on the crank angle for the firing pressure peak may be optimized.

If the firing pressure peak angle cannot be adjusted further since the pilot fuel injection timing is at its limit, the EGR rate has to be adjusted.

If the pilot fuel injection has reached a maximum limit (e.g. - 5°CA) and should not be further raised, the EGR rate may be increased. The EGR rate may be increased by a closing of the back-pressure valve, by e.g. 5%.

If the pilot fuel injection timing has reached the minimum limit (e.g. -17°CA) and should not be further lowered, the EGR rate may be decreased by opening the back-pressure valve, by e.g. 5%.

If the pack pressure valve has reached a maximum closing angle and the firing pressure peak angle has a too early angle (e.g. 2°CA) the control unit may show a malfunction. The engine may change/trip from a low pressure fuel gas operation to a diesel mode.
According to a further aspect of the invention, the object is achieved by an internal combustion engine, preferably as described above, comprising a measuring unit for detecting the firing pressure peak within the cylinder and the corresponding crank angle, and comprising a control unit.

The control unit is configured for optimizing the crank angle for the firing pressure peak,
- by adapting the EGR rate in an internal combustion engine comprising a system for exhaust gas recirculation arranged between an exhaust outlet and an air inlet and/or
- by adapting the timing of the pilot ignition timing in an internal combustion engine comprising a pilot injection system and/or
- by adapting the amount of added fluid fuel and/or
- by adapting the scavenge air pressure; and/or
- by adapting the amount of an inert addition.

By controlling the crank angle for the firing pressure peak, that is by controlling the combustion phasing, excessive firing pressures may be minimized.

EP3267017 teaches a method for operating a dual-fuel large diesel engine, in particular a longitudinally-scavenged two-stroke large diesel engine, which is operable in a liquid mode in which a liquid fuel is introduced into a cylinder for combustion, and which is further operable in a gas mode, in which a gas is introduced as fuel into the cylinder. The gas is mixed with purge air and is burned at an air-gas ratio. During operation in the gas mode, a control parameter is monitored, based on which changes in the air-gas ratio are recognizable. The large diesel engine may be operated in a power balancing mode if the control parameter reaches a limit, wherein in the power balancing mode, the air-gas ratio for the combustion of the gas is increased. The control parameter may be the pressure peak.

There is the risk, that the pressure measurement does not provide exact or reproducible values for the pressure. For example, the pressure sensor may be contaminated. The absolute values of the pressure curve also depend on the ambient temperature. However, generally even an impaired pressure sensor provides a reliable qualitative measure curve.

Thus, a control unit for optimizing the crank angle of the pressure peak is more reliable than a control unit working on the basis of absolute pressure values.

According to the present invention, the crank angle of the pressure peak is a control parameter, which is monitored and optimized.

The timing of the pilot ignition may be regulated by adapting the amount of introduced fuel, especially for an engine being operated without exhaust gas recirculation. Additional to a low pressure fuel gas a small amount of diesel may be injected.

For example, the amount of injected diesel fuel can also be determined depending on the measured crank angle of the firing pressure peak. The amount can be set, such that an optimal firing pressure peak crank angle is achieved.

The diesel fuel injection may start with a small amount of fuel whereas the phasing of the firing pressure is monitored constantly. The firing pressure peak angle may be located at an early point of time, for example 2°CA (2 degree after the top dead centre of the crank, corresponding to 0°CA).

The diesel fuel injection may be increased until a predetermined crank angle of the firing pressure peak, for example of 4°CA, is reached.

If the crank angle of the firing pressure peak is retarding to an upper maximum value, for example 7°CA, the diesel fuel injection may be reduced again. The diesel fuel injection may be even reduced until zero when the firing pressure peak angle remains continuously greater than a predetermined minimum value, for example 2°CA.

Additionally, if the cylinder pressure, even within the crank angle being between a predetermined minimum value and a predetermined maximum value, is below a predetermined lower limitation, the diesel fuel injection may be started or increased. If the cylinder pressure is reaching a predetermined upper limitation, the diesel fuel injection may be reduced.

Especially in systems without exhaust gas recirculation, the combustion phasing may be controlled by the scavenge air pressure. The scavenge air pressure may be controlled by an exhaust waste gate. The setting of the waste gate determines how much of the exhaust gas is used to drive the turbocharger. Preferably, between the exhaust outlet and the turbocharger there is arranged a junction leading to the turbocharger on the one hand and to the waste gate on the other hand.

If the scavenge air pressure cannot be further controlled, for example because the total amount of exhaust gas is used to drive the turbocharger and thus the scavenge air pressure may not be further increased, combustion phasing may be control may by another measure. For example, an additional amount of diesel fuel may be injected.

The combustion phasing may also be controlled adapting the amount of an inert addition, that is by adding more or less inert mass, for example inter gas or water.

The object is also achieved by a method for running an internal combustion engine, preferably as described above. The engine has at least one cylinder, preferably a large vessel engine with at least one cylinder having an inner diameter of at least 200mm. The method comprises the step of recirculating at least a part of the exhaust gas.The EGR rate or the exhaust gas back pressure is set by adapting an exhaust gas flow restriction device, for example the opening of an exhaust gas back pressure valve, preferably in a range between 5 to 100mbar, more preferably of at least 25mbar.The exhaust gas flow restriction device is arranged between the EGR path and an exhaust gas funnel.

Alternatively or additionally, the proportion of exhaust gas to the total amount of gas sucked in by a turbocharger is set by adapting an air-flow restriction device arranged in the air inlet upstream of the compressor of a turbocharger, preferably by adjusting the opening of an air-inlet valve.

Preferably the method comprises the step of injecting low pressure fuel gas into the cylinder. The occurrence of pre-ignition may be reduced or prevented by introducing exhaust gas.

In a preferred embodiment, exhaust gas mixed with fresh air is guided to an air inlet of the cylinder by a turbocharger. In particular the turbocharger sucks in air and exhaust gas.

Advantageously an EGR-rate is set without using a pressure elevating device, such as a blower. Preferably, the exhaust gas pressure flow is solely determined by the setting of the exhaust gas flow restriction device and/or the air-flow restriction device and the suction pressure of a turbocharger.

A pre-fuel mixture may be ignited with a pilot ignition system.

The firing pressure peak and the corresponding crank angle may be measured.

The proportion of exhaust gas to the total amount of gas sucked in by a turbocharger may be adjusted by adapting the opening of an air-inlet valve, preferably arranged in the air inlet upstream of the compressor of a turbocharger.

The object is also achieved by a method for running an internal combustion engine having at least one cylinder, preferably as described above. The internal combustion engine preferably is a large vessel engine with at least one cylinder having an inner diameter of at least 200mm. The method preferably comprises the step of injecting low pressure fuel gas into the cylinder.

The method comprises the steps of recirculating exhaust gas between an exhaust outlet, and an air inlet and adapting the EGR rate, preferably as described above.

Additionally or alternatively the method comprises the steps of igniting a pre-fuel mixture with a pilot injection system, and adapting the timing of the pilot ignition.

Additionally or alternatively the method comprises the steps of adapting the amount of added fluid fuel.

Additionally or alternatively the method comprises the steps of adapting the scavenge air pressure.

Additionally or alternatively the method comprises the steps of adapting the amount of an inert mass addition.

Preferably the firing pressure peak crank angle is optimized. Optimizing the firing pressure peak crank angle means altering the operation of the internal combustion engine until an optimal crank angle for firing pressure peak is reached. The optimal crank angle for the firing pressure peak may be predetermined. Preferably the optimal crank angles for respective loads are stored as a vector for the setpoint. The firing pressure peak crank angle may be optimized by setting the pre-ignition time.

The pre-ignition time may be regulated with respect to an optimal firing pressure peak crank angle.

Preferable the pressure curve is measured and the crank angle of the maximum, that is the firing pressure peak, is detected.

If the crank angle does not correspond to the predetermined optimal crank angle, the pre-ignition time or the timing of the pilot injection may be adjusted. Preferably the timing of the pilot injection is adjusted by a closed loop control.

If the crank angle at the measured firing pressure peak is greater than the predetermined angle, the ignition time may shifted to an earlier time that is to a smaller crank angle.

If the crank angle at the measured firing pressure peak is lower than the predetermined angle, the ignition time may shifted to a later time that is to a greater crank angle.

The pilot fuel injection time or the pilot fuel injection crank angle has to remain within a predefined minimum and maximum level.

If the minimum level is reached, the exhaust gas back pressure may be increased by closing the exhaust gas back pressure valve, to increase the exhaust gas recirculation rate.

If the maximum level is reached, the exhaust gas back pressure may be decreased by opening the exhaust gas back pressure valve, to increase the exhaust gas recirculation rate.

The firing pressure peak crank angle may also be optimized by setting an exhaust gas back pressure in an exhaust gas recirculation system, for example by adapting an opening of an exhaust gas back pressure valve.

The firing pressure peak crank angle may also be optimized by setting the amount of injected diesel fuel or by adapting the scavenge air pressure or by adapting the amount of an inert mass addition.

In the following, the invention is further explained in embodiments by means of figures:
- Figure 1:: shows a schematic view of a first example of a combustion engine;
- Figure 2:: shows a schematic view of a second example of a combustion engine;
- Figure 3:: shows a schematic view of a turbocharger;
- Figure 4: shows a schematic representation of the pressure in the cylinder for different EGR-rates;
- Figure 5: shows a schematic view of a third example of a combustion engine.

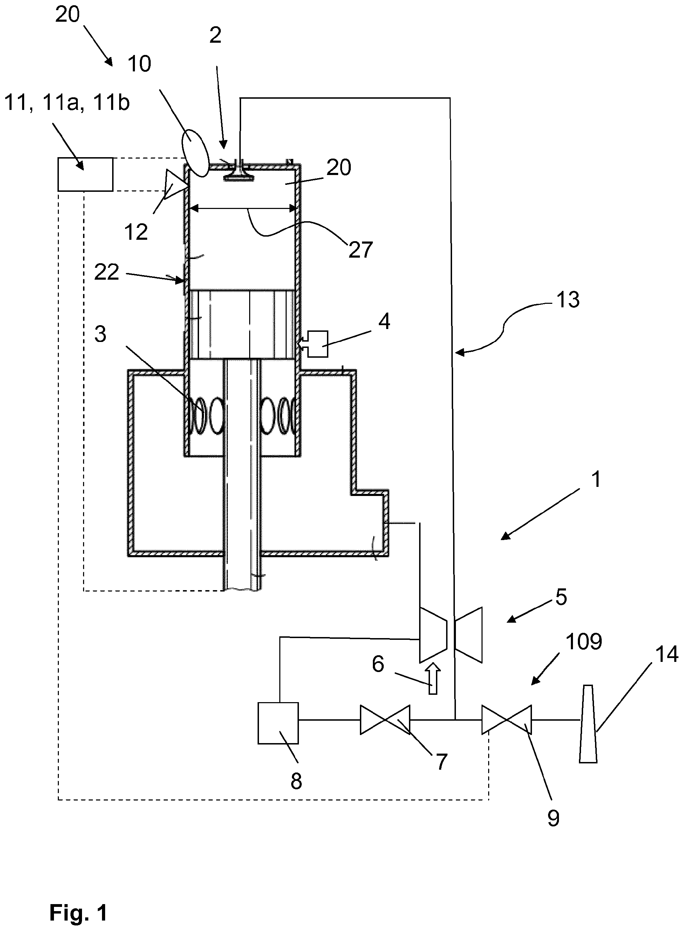

Figure 1 shows a schematic view of a first example of an internal combustion engine 20.

The internal combustion engine 20 has at least one cylinder 21.

Preferably, the internal combustion engine is a large vessel engine with at least one cylinder 21 having an inner diameter 27 of at least 200mm.

Preferably, the internal combustion engine is a low pressure fuel gas engine with a cylinder 21 having at least one gas admission valve 4 for injecting low pressure fuel gas directly into the cylinder 21 through the cylinder wall 22.

The internal combustion engine 20 comprises a system 1 for exhaust gas recirculation arranged between an exhaust outlet 2 of the cylinder and an air inlet 3 of the cylinder.

The system 1 for exhaust gas recirculation comprising an exhaust gas flow restriction device 109, in this particular embodiment an exhaust gas back pressure valve 9, which is arranged between the EGR path 13 and the exhaust gas funnel 14.

The internal combustion engine 20 comprises a turbocharger 5, which is arranged such that the turbocharger 5 at least partly is powerable by the exhaust gas. Exhaust gas mixed with fresh air 6 is guided to the air inlet 3 of the cylinder by the turbocharger 5.

The turbocharger 5 may suck in exhaust gas and fresh air 6.

Apart from the turbocharger 5 there is no pressure elevating device in the EGR path 13.

The system 1 for exhaust gas recirculation comprises a cooling device 8 arranged in the EGR path 13, preferably designed to provide a pressure drop of smaller than 15mbar.

The system 1 comprises a shut-off valve 7 arranged in the EGR path 13 for running the internal combustion engine 20 without recirculation of exhaust gas, when the valve 7 is closed. The exhaust gas will then completely leave the EGR path 13 and is guided towards the exhaust gas funnel 14.

The cylinder 21 comprises a pilot ignition system 10 for injecting pilot fuel.

The internal combustion engine 20 further comprises a control unit 11, for optimizing the crank angle for the firing pressure peak, comprising a control unit 11b configured for regulating the timing of the pilot injection depending on the crank angle for the firing pressure peak and a control unit 11a for adapting the EGR rate.

The internal combustion engine 20 comprises a measuring unit 12 for detecting the firing peak pressure within the cylinder and the corresponding crank angle.

The control unit 11 may receive measurement data of the measurement device 12 and the control unit 11b may set the timing of the pilot injection by respective operating the pilot ignition system 10.

The control unit 11 may also receive measurement data of the measurement device 12 and the control unit 11a may set the opening of the exhaust gas back pressure valve 9.

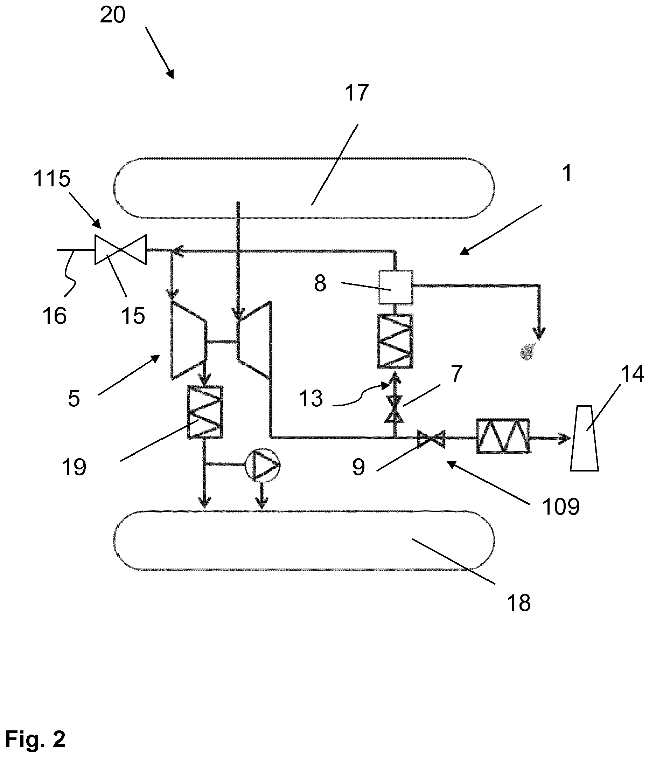

Figure 2 shows a schematic view of a second example of an internal combustion engine 20.

The internal combustion engine 20 comprises a system 1 for exhaust gas recirculation arranged between exhaust gas receiver 17 and a scavenge air receiver 18 of the cylinder.

The system 1 for exhaust gas recirculation comprising an exhaust gas back pressure valve 9, which is arranged between the EGR path 13 and the exhaust gas funnel 14.

The internal combustion engine 20 comprises a turbocharger 5, which is arranged such that the turbocharger 5 at least partly is powerable by the exhaust gas.

Before entering the scavenge air receiver 18 the gas leaving the turbocharger 5 is guided through a scavenge air cooler 19.

The system 1 for exhaust gas recirculation comprises a cooling device 8 arranged in the EGR path 13.

The system 1 comprises a shut-off valve 7 arranged in the EGR path 13.

The internal combustion engine 20 comprises an adaptable air-flow restriction device 115, in this particular embodiment an air-inlet valve 15 with a controllable opening, arranged in the inlet 16 for ambient air upstream of the turbocharger 5.

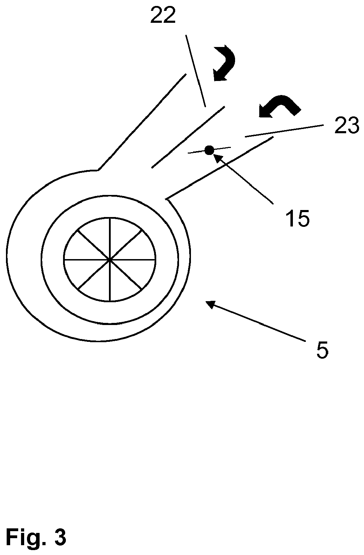

Figure 3 shows a schematic view of a turbocharger 5. The turbocharger comprises an exhaust gas intake 22 and an intake for ambient air 23. An air-inlet valve 15 is arranged in the intake for ambient air 23, which throttles the intake of fresh air, such that the percentage of exhaust gas is increased.

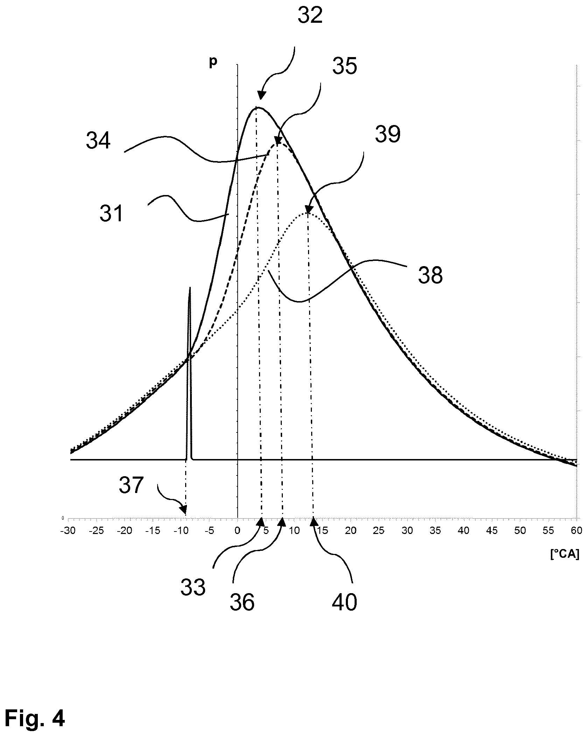

Figure 4 shows a schematic representation of the pressure p over the crank angle °CA in the cylinder for different EGR rates.

A first pressure curve 31, being related to a high EGR rate, has its firing pressure peak 32 at a crank angle 33.

A second pressure curve 34, being related to an optimal EGR rate, has its firing pressure peak 35 at a crank angle 36.

A third pressure curve 38, being related to a low EGR rate, has its firing pressure peak 39 at a crank angle 40.

The pilot fuel injection may happen at a crank ankle 37.

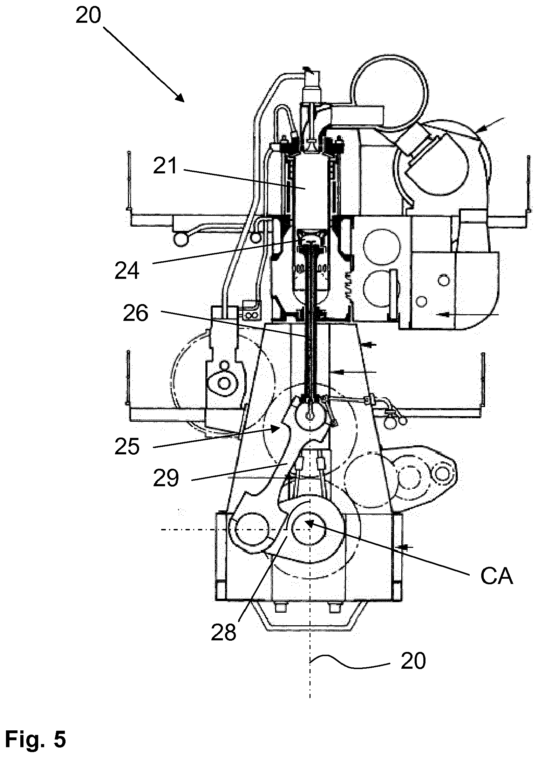

Figure 5 shows a schematic view of a third example of a combustion engine 20. A piston 24 is movably arranged within the cylinder 21.
The piston 24 is connected to a crosshead 25 via a piston rod 26, and the crosshead 25 is connected to a crankshaft 28 via a connecting rod 29 to drive the crankshaft 28.

The position of the crankshaft 28 with respect to a vertical axis 30 defines the crank angle CA. The figure shows the engine 20 in a position with a crank angel CA of -90°. Hence, when the piston 24 is in its top position, the crank angel is 0°. When the piston 24 is in its lowest position, the crank angel is 180° or -180°.

## Claims

1. Internal combustion engine (20) having at least one cylinder (21), preferably a large vessel engine with at least one cylinder (21) having an inner diameter (27) of at least 200mm, preferably a low pressure fuel gas engine with a cylinder having at least one gas admission valve (4) for injecting low pressure fuel gas directly into the cylinder (21) through the cylinder wall (22),
the internal combustion engine (20) comprising a system (1) for exhaust gas recirculation arranged between an exhaust outlet (2) and an air inlet (3),
**characterized in that**
the system (1) for exhaust gas recirculation comprising an exhaust gas flow restriction device (109) being arranged between the EGR path (13) and an exhaust gas funnel, providing a, preferably adaptable, back pressure for controlling the exhaust gas recirculation rate.

2. Internal combustion engine (20) according to claim 1, wherein the exhaust gas flow restriction device (109) is an exhaust gas back pressure valve (9), in particular comprising a controllable opening, to provide an adaptable back pressure for controlling the exhaust gas recirculation rate, preferably in a range between 5 to 100mbar.

3. Internal combustion engine (20) according to claim 1 or 2,
wherein
the internal combustion engine (20) comprises a turbocharger (5), which preferably is arranged such that the turbocharger (5) at least partly is powerable by the exhaust gas and/or the exhaust gas is guideable to the air inlet (3) of the cylinder by the turbocharger (5) mixed with fresh air (6), the turbocharger (5) in particular may suck in exhaust gas and fresh air.

4. Internal combustion engine (20) according to one of the preceding claims, wherein
the system (1) for exhaust gas recirculation comprises no pressure elevating device, such as a blower.

5. Internal combustion engine (20) according to one of the preceding claims, wherein
the system (1) for exhaust gas recirculation comprises a cooling device (8) arranged in the EGR path (13), preferably designed to provide a pressure drop of smaller than 15mbar.

6. Internal combustion engine (20) according to one of the preceding claims, wherein the system (1) comprises at least one shut-off valve (7) arranged in the EGR path (13) for running the internal combustion engine (20) without recirculation of exhaust gas.

7. Internal combustion engine (20) according to one of the preceding claims, wherein the internal combustion engine (20) comprises a, preferably adaptable, air-flow restriction device (115), in particular an air-inlet valve (15) with a controllable opening, arranged upstream of a turbocharger (5), preferably in the inlet (16) for ambient air.

8. Internal combustion engine (20) according to one of the preceding claims, wherein
the cylinder (21) comprises a pilot injection system (10).

9. Internal combustion engine (20), according to one of the preceding claims, wherein
the internal combustion engine (20) comprises a measuring unit (12) for detecting the firing pressure peak within the cylinder and the corresponding crank angle.

10. Internal combustion engine (20) according to claim 9, wherein the internal combustion engine (20) comprises a control unit (11a) and the control unit (11a) is configured for adapting the EGR rate, by adapting the exhaust gas flow restriction device (109) and/or by adapting an air-flow restriction device (115), depending on the crank angle (33, 36, 40) for the firing pressure peak (32, 35, 39).

11. Internal combustion engine (20), preferably according to one of the preceding claims, having at least one cylinder (21), preferably a large vessel engine with at least one cylinder (21) having an inner diameter (27) of at least 200mm, preferably a low pressure fuel gas engine with a cylinder having at least one gas admission valve for injecting low pressure fuel gas directly into the cylinder through the cylinder wall (22),
the cylinder (21) comprising a pilot injection system (10), the internal combustion engine (20) preferably comprises a system (1) for exhaust gas recirculation arranged between an exhaust outlet (2) and an air inlet (3),
**characterized in that**
the internal combustion engine (20) comprises a control unit (11), being configured for regulating the timing of the pilot injection.

12. Internal combustion engine (20), according to one of the preceding claims, wherein
the internal combustion engine (20) comprises a measuring unit (12) for detecting the firing pressure peak within the cylinder and the corresponding crank angle, and the internal combustion engine (20) comprises a control unit (11b) and the control unit (11b) is configured for regulating the timing of the pilot injection depending on the crank angle for the firing pressure peak.

13. Internal combustion engine (20) preferably according to one of the preceding claims, wherein the internal combustion engine (20) comprises a measuring unit (12) for detecting the firing pressure peak within the cylinder and the corresponding crank angle , wherein a control unit (11) is configured for optimizing the crank angle for the firing pressure peak,
by adapting the EGR rate in an internal combustion engine (20) comprising a system (1) for exhaust gas recirculation arranged between an exhaust outlet (2) and an air inlet (3) and/or
by adapting the timing of the pilot ignition timing in an internal combustion engine (20) comprising a pilot injection system (10)
and/or
by adapting the amount of added fluid fuel
and/or
by adapting the scavenge air pressure;
and/or
by adapting the amount of an inert addition.

14. Method for running an internal combustion engine (20), according to one of claims 1-11 , comprising the steps of
- recirculating at least a part of the exhaust gas,
- setting the EGR rate by adapting the EGR-flow restriction device (9) and/or by adjusting the proportion of exhaust gas to the total amount of gas sucked in by a turbocharger by adapting an air-flow restriction device ()arranged in the air inlet () upstream of a turbocharger (5), preferably by adjusting the opening of an air-inlet valve (), in particular by adapting the opening of an exhaust gas back pressure valve (9), preferably in a range between 5 to 100mbar, more preferably of at least 25mbar.

15. Method according to claim 14, comprising the step of injecting low pressure fuel gas into the cylinder.

16. Method according to claim 14 or 15, comprising the step of
- guiding exhaust gas mixed with fresh air to an air inlet (3) of the cylinder (21) by a turbocharger (5), in particular the turbocharger (5) sucking in air and exhaust gas.

17. Method according to one of claims 14 to 16, comprising the step of
setting an EGR-rate without using a pressure elevating device, such as a blower.

18. Method according to one of claims 14-17, comprising the step of
igniting a pre-fuel mixture with a pilot injection system (10) .

19. Method according to one of claims 14-18, comprising the step of
measuring the firing pressure peak and the corresponding crank angle.

20. Method , preferably according to one of claims 12-18, for running an internal combustion engine (20), preferably according to one of claims 1-11, having at least one cylinder (21), preferably a large vessel engine with at least one cylinder (21) having an inner diameter (27) of at least 200mm, preferably comprising the step of injecting low pressure fuel gas into the cylinder, the method further comprising the steps of
recirculating exhaust gas between an exhaust outlet (2), and an air inlet (3) and adapting the EGR rate
and/or
igniting a pre-fuel mixture with a pilot injection system (10), and adapting the timing of the pilot ignition timing and/or
adapting the amount of added fluid fuel
and/or
adapting the scavenge air pressure;
and/or
adapting the amount of an inert mass addition.
